Europäisches Patentamt

(19) European Patent Office

Office européen des brevets

(11) Publication number: **0 046 380**
**B1**

(12) **EUROPEAN PATENT SPECIFICATION**

(45) Date of publication of patent specification: **04.12.85**

(21) Application number: **81303703.3**

(22) Date of filing: **14.08.81**

(51) Int. Cl.⁴: **A 01 N 59/14,** A 01 N 25/02,
B 27 K 3/52, B 27 K 3/36,
B 27 K 3/34, B 27 K 3/16

(54) Composition for application to a porous substrate, and method of treating timber with it.

(30) Priority: **18.08.80 GB 8026815**

(43) Date of publication of application:
**24.02.82 Bulletin 82/08**

(45) Publication of the grant of the patent:
**04.12.85 Bulletin 85/49**

(84) Designated Contracting States:
**AT BE CH DE FR GB IT LI LU NL SE**

(56) References cited:
**DE-B-1 077 476**
**GB-A- 937 766**
**GB-A-1 089 527**
**GB-A-1 121 879**
**GB-A-1 246 540**
**US-A-3 305 298**

**Kirk-Othmer, Encyclopedia of Chemical
Technology (1978), Vol. 4, p. 76-77
Chambers Dictionary of Science and
Technology, Vol. 2, p. 695**

(73) Proprietor: **Wood-Slimp G.m.bH
CH-7000 Chur (CH)**

(72) Inventor: **Bechgaard, Carl Christian
Bredballe
DK-7100 Vejle (DK)**

(74) Representative: **Haigh, Charles Roy
J.A. KEMP & CO. 14 South Square Gray's Inn
London WC1R 5EU (GB)**

Courier Press, Leamington Spa, England.

## Description

This invention relates to a liquid composition for application to a porous substrate, such as timber, including wood-based building materials such as particle-board and chipboard, brickwork, concrete and mortar, liable to harbour infection, such as fungal infection.

The invention is of particular importance for the transport of a boron-containing biologically active, notably insecticidal and fungicidal, ingredient into wood either as a remedial treatment for existing insect attack or fungus decay or as a prophylactic treatment against future infection. Thus in a particular aspect the invention relates to the treatment of wood with a liquid composition to reduce its suspectibility to wood-destroying insects and decay-causing fungi.

Insecticides, herbicides, fungicides and similar biologically active materials are often applied to substances which they are intended to protect from insect, herbal or fungal infection in the form of a solution of said active material in a liquid. Examples of liquids widely used as carriers for biologically active materials are water, white spirit or other petroleum fraction, and alcohols of 3 or more carbon atoms (see for example US—A—3305298). The carriers commonly employed for this purpose have disadvantages—some do not penetrate rapidly into the substrate, while others present fire risk or are otherwise objectionable on the ground of damage to the environment.

GB—A—937,766 shows a composition for application to timber to make it flame-retardant and incidentally immune to insect and fungus attack; the active ingredient in the composition is a sodium octaborate and the carrier i.e. the predominant solvent, is water, and the composition may include a small amount, 1—5%, of ethylene glycol as a humidifying agent. Timbor (or Polybor) is recommended only for application to green timber, usually as an aqueous paste containing up to 40% of active ingredient. However, boron-rich compounds when applied to timber from solution in water diffuse into the timber only slowly, over some weeks, to the high loading considered necessary for full protection of the timber, and may leach out fairly readily if not protected from contact with water after application. They are recommended for the treatment of freshly-sawn timber before it is used in building, but not recommended for the treatment of wood in a building, and are specifically contraindicated for conditions involving ground contact and for external use except where protected by paint.

According to the present invention there is provided a liquid composition for application to a porous substrate, such as timber, liable to harbour infection comprising

a) as active ingredient, a material containing combined boron in an amount equivalent to more than 20% $B_2O_3$ by weight of the material, the quantity of active ingredient being sufficient to provide at least 10%, preferably at least 15%, by weight of combined boron, calculated as $B_2O_3$, by weight of the composition;

b) ethylene glycol as liquid carrier for the active ingredient in an amount of at least 50% by weight of the composition; and optionally

c) water in an amount of at most 20% by weight of the composition.

It appears possible that the ethylene glycol used as carrier in accordance with the invention, being hygroscopic, is drawn into a porous substrate by its affinity with residual moisture there, whether in moist wood, in brickwork, in mortar, or in water bonded to the cellulose in apparently dry wood. The liquid composition of the invention penetrates the porous substrate more rapidly than does water.

The active ingredient of the liquid composition of the invention is a material containing combined boron in an amount equivalent to more than 20%, preferably more than 25%, especially more than 35%, by weight $B_2O_3$. Examples of such compounds are boric oxide itself, boric acid, borax (sodium tetraborate decahydrate), borax pentahydrate, anhydrous borax, and various potassium and ammonium borates. Another such compound, which has been widely used for the preservation of timber and which is the preferred active ingredient in the composition of the present invention, is disodium octaborate, a water-soluble powder of the approximate composition $Na_2B_8O_{13} \cdot 4H_2O$. This is available in the United Kingdom under the Registered Trade Mark "Timbor" and in the United States of America under the Trade Mark "Polybor". The preparation of disodium octaborate hydrate is described in US—A—2,998,310.

With the liquid composition containing ethylene glycol as carrier according to the present invention we have found that it is possible to achieve a rapid penetration of boron-rich compounds into wood and other porous substrates by simple brushing or dipping techniques even without use of vacuum or pressure to promote penetration, and that high amounts of boron-rich compound can thus be introduced. Compositions of the present invention can successfully be applied to wood additional to freshly-sawn timber, e.g. as a remedial treatment for infection.

We have found that a solution consisting of 60% by weight ethylene glycol and 40% by weight sodium octaborate is unexpectedly stable at temperatures as low as −20°C, though it is necessary to heat the mixture to 60° to effect dissolution. Such a solution may be rather viscous for application to timber by brushing or spraying and it can then be thinned with a diluent, notably with water. However, if water or other diluent is present in the composition of the invention, its amount should not exceed 20% by weight of the composition. We have found that addition of as little as 25% by weight of water to the relatively concentrated glycol solution of the active ingredient may cause the active ingredient to precipitate, and though the precipitate can be re-dissolved by heating the mixture, this is inconvenient. The ethylene glycol which is the carrier for the active ingredient in the composition of this invention appears to force its way rapidly into the surface portion of wood to which it is applied, whereas an aqueous solution of the active ingredient diffuses more slowly. Dilution of the ethylene glycol solution with water should, therefore, be minimized to the level needed to achieve a workable viscosity.

Dilution of the ethylene glycol solution with ethanol, e.g. 5% of ethanol, can marginally reduce the penetration time but ethanol is a fire hazard.

The impregnation of wood and wood products with polyethylene glycol in order to make the wood dimensionally stable (i.e. to preent shrinkage when the wood dries out) has previously been proposed, and with such proposal there has been suggested the simultaneous incorporation of an insecticidal, fungicidal or fire-retarding agent of which borax is one example. In that case, however, the aim has been to stabilise the timber, and the presence of the insecticidal or other agent, in small amount, has been merely incidental. In the composition of the present invention the liquid, i.e. monoethylene glycol, serves as a mere carrier for the active ingredient, which must therefore be present in substantial amount—at least 10% by weight of combined boron, expressed as $B_2O_3$, by weight of the composition.

A typical composition according to the present invention comprises by weight:

| | |
|---|---|
| Disodium octaborate | 40% |
| Ethylene glycol | 60% |

A preferred composition according to the invention comprises by weight:

| | |
|---|---|
| Disodium octaborate | 40% |
| Ethylene glycol | 51% |
| Water | 9% |

The composition of this invention can be prepared by simply mixing the active ingredient, e.g. disodium octaborate, with the ethylene glycol carrier; for a solution containing a large amount such as the preferred 40% of the active ingredient it is necessary to heat the mixture to e.g. 60°C in order to effect dissolution, but once dissolved the solute shows no tendency to precipitate when cooled. This suggests that the preferred composition of this invention may be a stable super-saturated solution.

The concentration of active ingredient may be varied as desired to achieve a desired concentration of boron. The most suitable composition contains more than 20% by weight of boron calculated as $B_2O_3$, compositions containing 15% or even 10%, are still, though less, effective.

Thus a higher concentration of borax (36.5% $B_2O_3$) is needed than a Timbor, (67.1% $B_2O_3$). In general, however, the highest reliably stable concentration of $B_2O_3$ is needed, which makes it preferable to use boron-rich materials having a $B_2O_3$ content of 60% or more.

A composition of the invention may be applied to wood by any desired method, e.g. immersion, by spraying or most conveniently by brushing. It is an advantage of this invention that more complicated techniques for effecting penetration, such as pressure or the vacuum-vacuum process, are not generally needed though they may be used for compositions of this invention if desired. We have measured the rate of penetration of compositions according to the invention when brushed onto the surface of wood (pine sapwood of moisture content 19—20%; spruce and other softwoods and even hardwoods such as oak and beech react similarly) at the rate of 160 grams of composition per square metre of wood. Compositions containing 20% and 40% by weight of active ingredient both penetrate to a depth of 3—5 mm within 24 hours. The penetration is substantially uniform, i.e. there is no marked concentration gradient, and the ethylene glycol carrier and borate active ingredient penetrate equally, i.e. there is no immediate separation of solute from solvent. Subsequently the boron-rich material diffuses more deeply into the wood, the depth of penetration being at least doubled in the course of twenty weeks in wood of 15—20% moisture content, though the carrier does not diffuse so far. The penetration of the carrier can be observed by inclusion of a fruit dye therein, and of the borate by reaction with turmeric.

It is therefore appears possible that the ethylene glycol carrier serves to draw the borate rapidly into the outer portion of the wood near the surface, and that once a reservoir is thus established subsequent penetration is by the same mechanism as causes the slow diffusion of borate as disclosed in GB—A—937766.

The more concentrated solution, e.g. 40% as opposed to 20%, appears to penetrate the wood more quickly than the less concentrated, during the initial treatment of the wood with the composition, and further penetration can be achieved by a second application. Thus in some cases it may be advantageous to make two applications of a less concentrated solution to achieve the same loading. With a single application of the 40% composition it is possible to incorporate borate into the outer 5 mm of wood evenly at the rate of 12 kg/m$^3$ within 24 hr of application—diffusion to greater depth follows.

It is well established that the presence of borates (such as the sodium octaborate preferred for this invention) in wood protects the wood from fungal decay and insect attack. Moreover, the composition set out above containing 40% sodium octaborate, ethylene glycol and a small amount of water has been used in practice and found effective in conditions where other remedial treatments have been tried and failed. Fungus species which have been controlled in infected wood in buildings include Coniophora cerebella, C. putriana, Lenzitis sapiara, L. tribium, Merulius lacrymans, Poria vaporaria and Paxillus sp.; in each case severely infected wood was treated with a composition according the invention and the fungus growth died. The treatment composition penetrated also the surrounding brickwork concrete and killed fungus which had spread there from the wood.

Timbers in buildings infested with Xestobium rufivollosum, Anobium punctatum, A. mollis and Callidium Viollacem have been sprayed or brushed with the composition according to the invention and in each case all sign of infection, i.e. fresh larva dust or flight holes, ceased.

The composition of this invention wherein the active material is a boron-rich compound has the unexpected effect of preparing the surface of wood for subsequent painting and thus serves as a priming composition.

## Claims

1. A liquid composition for application to a porouus substrate, such as timber, liable to harbour infection comprising

a) as active ingredient, a material containing combined boron in an amount equivalent to more than 20% $B_2O_3$ by weight of the material, the quantity of active ingredient being sufficient to provide at least 10% by weight of combined boron, calculated as $B_2O_3$, by weight of the composition;

b) ethylene glycol as liquid carrier for the active ingredient in an amount of at least 50% by weight of the composition; and optionally

c) water in an amount of at most 20% by weight of the composition.

2. A composition according to claim 1, wherein the active ingredient a) contains combined boron in an amount equivalent to more than 35% $B_2O_3$ by weight.

3. A composition according to claim 1 or 2, wherein the active ingredient a) is selected from (i) boric oxide, (ii) borax, (iii) borax pentahydrate, (iv) anhydrous borax and (v) a disodium octaborate.

4. A composition according to claim 1, 2 or 3, wherein the active ingredient a) is present in an amount 20 to 40% by weight of the active ingredient (a) plus ethylene glycol (b).

5. A composition according to any one of claims 1 to 4, wherein the quantity of active ingredient a) is sufficient to provided at least 15% of combined boron, calculated as $B_2O_3$, by weight of composition.

6. A composition according to claim 3, wherein the active ingredient a) is a disodium octaborate in an amount 20 to 40% by weight of composition.

7. A method of treating timber to reduce its susceptibility to wood-destroying insects and decay-causing fungi which comprises effecting penetration into the wood of a composition as claimed in any one of claims 1 to 6.

## Patentansprüche

1. Flüssiges Mittel zur Aufbringung auf ein poröses Medium wie Bauholz, welches einer Infektion zugänglich ist, enthaltend

a) als Wirkstoff ein Material, welches gebundenes Bor in einer Menge entsprechend mehr als 20 Gew.-% als $B_2O_3$ enthält, wobei die Wirkstoffmenge ausreicht, um zumindest 10 Gew.-% gebundenes Bor als $B_2O_3$, bezogen auf das Gewicht des Mittels, zu ergeben;

b) Ethylenglykol als flüssiger Träger für den Wirkstoff in einer Menge von zumindest 50 Gew.-% des Mittels und gegebenenfalls

c) Wasser in einer Menge von höchstens 20 Gew.-% des Mittels.

2. Mittel nach Anspruch 1, worin der Wirkstoff a) gebundenes Bor in einer Menge entsprechend mehr als 35 Gew.-% $B_2O_3$ enthält.

3. Mittel nach Anspruch 1 oder 2, worin der Wirkstoff (i) Boroxid, (ii) Borax, (iii) Borax-Pentahydrat, (iv) wasserfreies Borax und (v) Dinatriumoctaborat ist.

4. Mittel nach Anspruch 1, 2 oder 3, worin der Wirkstoff in einer Menge von 20—40 Gew.-%, bezogen auf das Gewicht von Wirkstoff und Ethylenglykol, vorhanden ist.

5. Mittel nach einem der Ansprüche 1—4, worin die Wirkstoffmenge ausreicht, um zumindest 15% gebundenes Bor, berechnet als $B_2O_3$, bezogen auf Gewicht des Mittels, zu ergeben.

6. Mittel nach Anspruch 3, worin der Wirkstoff Dinatriumoctaborat in einer Menge von 20—40 Gew-% des Mittels ist.

7. Verfahren zur Behandlung von Bauholz, um die Anfälligkeit von Holz für Insekten und Fäulnis erregenden Pilzen herabzusetzen, indem das in einem der Ansprüche 1—6 definierte Mittel eindringen gelassen wird.

## Revendications

1. Composition liquide destinée à être appliquée sur un substrat poreux, tel que le bois d'oeuvre, susceptible d'abriter une infection comprenant:

a) comme ingrédient actif, une matière contenant du bore combiné dans une proportion équivalente à plus de 20 % de $B_2O_3$ en poids de la matière, la quantité d'ingrédient actif étant suffisante pour fournir au moins 10 % en poids de bore combiné, calculé en $B_2O_3$, par rapport au poids de la composition;

b) de l'éthylène glycol comme véhicule liquide pour l'ingrédient actif, dans une proportion d'au moins 50 % en poids de la composition; et facultativement

c) de l'eau dans une proportion d'au plus 20 % en poids de la composition.

2. Composition selon la revendication 1, dans laquelle l'ingrédient actif a) contient du bore combiné dans une proportion équivalente à plus de 35 % de B$_2$O$_3$ en poids.

3. Composition selon la revendication 1 ou 2, dans laquelle l'ingrédient actif a) est choisi parmi (i) l'oxyde borique, (ii) le borax, (iii) le pentahydrate de borax, (iv) le borax anhydre et (v) un octaborate disodique.

4. Composition selon la revendication 1, 2 ou 3, dans laquelle l'ingrédient actif a) est présent dans une proportion de 20 à 40 % en poids de l'ingrédient actif (a) plus l'éthylène glycol (b).

5. Composition selon l'une des revendications 1 à 4, dans laquelle la quantité d'ingrédient actif a) est suffisante pour fournir au moins 15 % de bore combiné, calculé en B$_2$O$_3$, en poids de la composition.

6. Composition selon la revendication 3, dans laquelle l'ingrédient actif a) est un octaborate disodique dans une proportion de 20 à 40% en poids de la composition.

7. Procédé de traitement du bois d'oeuvre pour réduire sa sensibilité aux insectes déruisant le bois et aux champignons provoquant la décomposition, qui consiste à effectuer la pénétration dans le bois d'une composition telle que revendiquée à l'une des revendications 1 à 6.